# EUROPEAN PATENT SPECIFICATION

(11) **EP 1 097 628 B1**
(45) Date of publication and mention of the grant of the patent: **01.03.2006**
(21) Application number: 00309411.7
(22) Date of filing: 26.10.2000
(51) Int. Cl.: A01F 15/07

(54) **Bale wrapper apparatus**
Ballenwickelvorrichtung
Appareil pour envelopper des balles

(30) Priority: 03.11.1999 GB 9925984
(43) Date of publication of application: 09.05.2001
(73) Proprietor: Kverneland Naerbo AS, 4350 Naerbo (NO)
(72) Inventor: Sandberg, Lars, 4350 Naerbo (NO)
(74) Representative: Orr, William McLean

(56) References cited:
- EP-A- 1 048 201
- WO-A-00/27179
- DE-A- 3 304 166
- DE-A- 4 243 406

## Description

This invention relates to a bale wrapper apparatus which is intended to be trailed behind a baler, and which is arranged to receive bales formed by the baler and to apply stretch film wrapping to the bale prior to discharge of the wrapped bale.

As is well known, agricultural balers are used to pick-up swaths of crop material lying on the ground e.g. straw, grass or hay, and to compress the material to form bales which are either cylindrical in shape (a so-called big bale or round bale), or rectangular in cross section. In some circumstances e.g. in the case of bales of newly mown grass which has been allowed to "wilt" i.e. to dry only to a limited extent, it is desirable to apply stretch film wrapping to the bale so that the grass can ferment to form silage, and therefore it has been a general practice for many years to use two separate (and unconnected) pieces of equipment, and operating at different times, in order to form wrapped bales of grass. Therefore, a baler is first used to pick-up swaths of crop lying on the ground, and form the crop into bales which are then deposited on the ground. A bale wrapper then is usually towed behind a tractor and moved through a field, stopping at each bale to pick it up, and then initiating a bale wrapping cycle prior to discharge of the wrapped bale, either onto the ground for subsequent collection, or onto a trailer.

However, relatively recently, there have been developed tandem combinations of baler and bale wrapper, with the baler being coupled behind a tractor and the bale wrapper coupled to the rear of the baler. This allows baling and bale wrapping to take place while the tractor moves along a swath of mown crop, and therefore speeds-up the operation with consequent economies in fuel consumption and labour costs.

One example of a tandem combination of a baler and bale wrapper is disclosed in more detail in International publication No. WO 00/2179, and the disclosure of which is intended to be incorporated herein by this reference.

A primary objective of the new design embodied in the tandem combination is to provide an automatically adjusting steering system which seeks to maintain alignment of the axes of the baler and the bale wrapper (even when the baler pivots about its coupling with the tractor during steering adjustment of the tractor), so as to assist in smooth transfer of a formed bale from the baler to the wrapper.

When a crop of grass is being harvested to form silage, it is usual to employ a mower which cuts the standing crop of grass, and then guides the cut grass into swaths deposited to the rear of the mower, such swaths being reduced in width compared with the width of the cutter bar of the mower. Therefore, when a baler is towed behind a tractor subsequently to pick-up the swaths, there will be a free area on each side of each swath, and which allows the tractor / baler combination to travel over the field without running over the swath and while picking-up the swath.

This is possible provided that the width of the swath is less than the distance between each of the front wheels, and also between each of the rear wheels of the tractor, so that the tractor wheels can move the tractor forwardly without running on the swath.

Since the baler is usually trailed directly behind the tractor, the swath can be picked-up from the ground without difficulty. However, in the case of a trailed combination of baler and wrapper, although there is no problem in the handling of the swath by the baler, in certain circumstances there can be a problem in dealing with the wrapped bales after they have been discharged from the bale wrapper.

Thus, in the case of adjacent swaths which are spaced close to each other, but of a width less than the space between the tractor wheels, the tractor can easily travel over the swath without risk of the tractor wheels running over the swath (which obviously would be undesirable in reducing the effectiveness of the picking-up of the swath by the baler). However, there can be a problem in avoiding a line of wrapped bales which may have been deposited on the ground during a previous pass of the tractor / baler / wrapper combination along the field, when swaths are close to each other.

This problem can arise, in that a previously deposited row of wrapped bales can lie in the desired path of travel of the front and / or rear wheels of the tractor on one side of the tractor (the side facing the previously deposited row of wrapped bales and opposite to the tractor side facing the so-far unlifted swaths).

It might be thought that the only way to solve this problem would be to attempt to manoeuver the tractor / trailed combination in such a way that the individual wrapped bales are avoided, but this would require the combination to follow a wavy or sinuous forward path which may result in (1) improper presentation of the swath to the pick-up mechanism of the baler and (2) a wavy line of deposited wrapped bales. Also, if a tractor does run-over a wrapped bale, the wrapping can become damaged, and with consequent exposure of the bale to air and water and which can damage or impair the quality of the baled crop.

The invention therefore seeks to address the problem by providing an operating cycle for the bale wrapper which includes (a) receiving a bale from the baler, (b) applying stretch film wrapping to the bale and (c) discharging the wrapped bale rearwardly onto the ground, in which the rearward discharge of the wrapped bale includes a lateral component in that the wrapped bale is displaced laterally of the line of forward travel of the tractor /baler / bale wrapper apparatus combination.

According to the invention there is provided a bale wrapper apparatus which is intended to be coupled to the rear of a baler and to form with the baler a towable baler /wrapper combination, in which the bale wrapper comprises:
a wheel-supported frame;
coupling means mounted on the frame and arranged to couple the apparatus to the rear of a baler so that a bale can be received from the baler, with the axis of the wrapper apparatus in a receiving position located generally in line with, or close to, the axis of the baler to which it is to be coupled;
a front mounted bale-engagement device operative to transfer, or assist in the transfer of a bale from the baler to the wrapper apparatus;
means for applying stretch-film wrapping to the bale;
means for discharging a wrapped bale from the apparatus; and,
means providing a cycle of operation of the bale wrapper apparatus, to effect (a) transfer of a bale to the apparatus, (b) wrapping of the bale, and (c) subsequent discharge of the wrapped bale:
characterised in that the operating cycle includes means for adjusting the axis of the bale wrapper apparatus from its receiving position, prior to effecting discharge of the wrapped bale, laterally of the axis of the baler, such means also being operative to return the axis of the bale wrapper apparatus to the receiving position after discharge of the wrapped bale, and prior to initiating of a new cycle of operation.

Therefore, in a bale wrapper apparatus according to the invention, a towable baler / bale wrapper apparatus combination can be provided, which is towed behind a tractor or other propelling vehicle, and generally moving in a direction parallel to the swath which is to be picked-up by the baler so that a bale can be received from the baler, with the axis of the wrapper apparatus in a receiving position located generally in line with, or close to, the axis of the baler to which it is coupled. However, after completion of wrapping of the bale, rearward discharge of a wrapped bale from the bale wrapper apparatus can be obtained, having at least a lateral component, whereby the discharged wrapped bale can be laterally displaced from the general direction of travel of the combination. By this means, a line of deposited wrapped bales can be formed, which leaves sufficient space alongside for a subsequent pass of the combination in handling an adjacent swath of crop material, and without any of the deposited wrapped bales impeding the forward path of movement of the combination when picking-up a further swath of crop material.

Conveniently, the coupling means which couples the bale wrapper apparatus to the baler comprises a drawbar, which is angularly adjustable about its coupling point to the rear of the baler, to provide adjustment of the axis of the bale wrapper apparatus relative to the baler, prior to rearward and lateral discharge of a wrapped bale.

In a further embodiment, a wheelset supports the frame, such wheelset being adjustable like a set of steering wheels, under the control of the means providing the operating cycle for the bale wrapper apparatus.

Preferred embodiments of bale wrapper apparatus according to the invention will now be described in detail, by way of example only, with reference to the accompanying drawings, in which:
Figure 1 is a schematic and perspective illustration from above of a towable baler /bale wrapper apparatus combination to which the invention may be applied, coupled to the rear of a tractor, and which may take the form of a combination of the general type disclosed in more detail in International publication No. WO 00/27179;
Figure 2 is a perspective and front view illustration of the combination shown in Figure 1;
Figure 3 is a view, similar to Figure 1, showing a first embodiment of bale wrapper apparatus according to the invention, and in particular showing one way in which the bale wrapper apparatus can be displaced laterally, relative to the axis of the trailed combination, so as to effect lateral discharge of a wrapped bale, with respect to the general axis of the combination; and,
Figure 4 is a view, similar to Figure 3, showing a further means of adjustment of the bale wrapper, in a final stage of a wrapping and discharge cycle, to effect lateral discharge of a wrapped bale relative to the general axis of the combination.

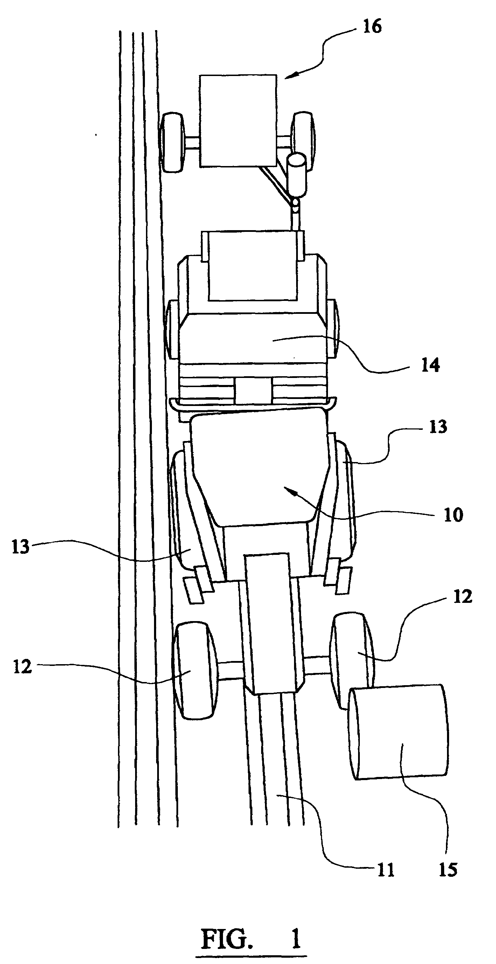

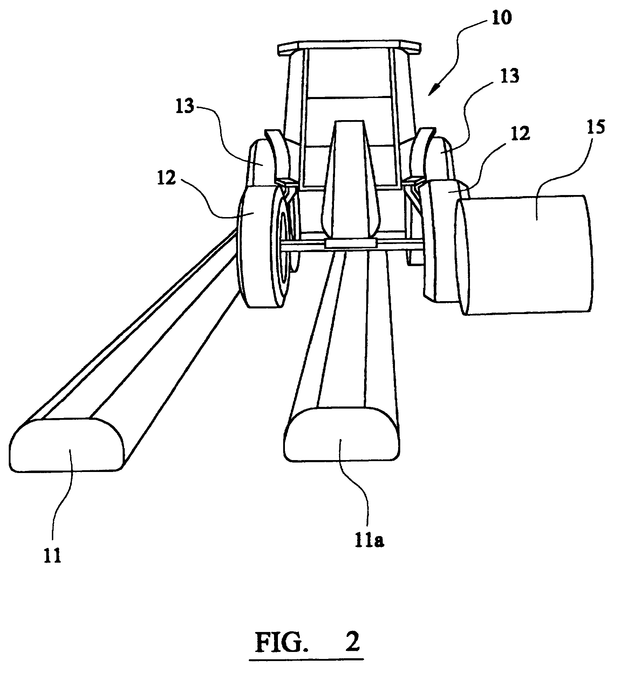

Referring first to Figures 1 and 2, this shows a general type of trailed combination of baler and bale wrapper, to which the invention may be applied. A tractor 10 propels the combination in a forward direction, by passing over a narrow swath 11 of crop e.g. newly mown grass which has been allowed to "wilt" by a sufficient amount for silage production, and it will be noted that the front and rear pairs of wheels 12 and 13 are spaced apart a sufficient distance to allow the tractor to move forwardly over the swath I 1 without running over any parts of the swath. A baler 14 is coupled to the rear of the tractor 10, and may be of the fixed chamber type, or variable chamber type, and in the illustrated arrangement also picks-up the crop material from the swath 11 by a front pick-up mechanism, transfers it to a bale-forming chamber, and then forms a cylindrical bale which is discharged rearwardly of the baler 14. In Figures 1 and 2, a wrapped bale 15 is shown, having been deposited during a previous pass of the tractor and trailed combination. A bale wrapper apparatus 16 is coupled to the rear of the baler 14, and is arranged to receive a bale discharged from the rear of the baler 14, and has a front pick-up mechanism (not shown in detail) to transfer the bale to a bale-wrapping table, so that wrapping of the bale can take place, prior to discharge rearwardly of the wrapped bale. The bale wrapper apparatus 16 can be of the rotating turntable type, or orbiting satellite type, both of which will be well known to those of ordinary skill in the art, and therefore need not be described in detail herein.

The trailed combination shown in Figures 1 and 2 is a general type of combination to which the invention may be applied, and for a more detailed description of the construction and operation of the trailed combination, reference may be had to the specification of International publication No. WO 00/27179.

The particular swath 11 which is shown in Figures 1 and 2 is a narrow swath, and which has a closely spaced adjacent row 11a (as shown in Figure 2). The present invention has been particularly, though not exclusively, developed in order to solve a problem in baling and wrapping closely spaced swaths, using a trailed combination as shown in Figures 1 and 2. Evidently, the width of the swath 11 will depend upon the extent of lateral inward guidance of a mown crop by a mower, and some swaths will be formed which are wider than the relatively narrow swaths 11, and this is satisfactory provided that the overall width of the larger swaths is not greater than the width spacing between the pairs of front wheels 12, and the pairs of rear wheels 13 of the tractor 10. However, in the case of closely spaced swaths 11, with the general type of trailed combination shown in Figures 1 and 2, the wrapped bale is usually deposited rearwardly of the bale wrapper apparatus 16, and so as to form a line of wrapped bales deposited on the ground, and generally along the general axis of the trailed combination (tractor 10, baler 14 and bale wrapper apparatus 16), during forward travel. When the combination carries out a further pass along the field, to pick-up and handle an adjacent swath, the geometry of the set-up is such that the previously deposited line of wrapped bales 15 lie in the path of travel of the tractor and the combination. This can be seen clearly from Figures 1 and 2, in which one of the wrapped bales 15 from a previously deposited row of bales is directly in the path of one of the front wheels 12, one of the rear wheels 13, and also of the support wheels of the baler 14 and the bale wrapper apparatus 16, (located on the sides thereof opposite to the next line of swath to be picked-up). The present invention therefore seeks to provide a means whereby the wrapped bales, produced by a trailed combination working with a relatively narrow swath, can deposit the wrapped bales laterally to a sufficient extent (relative to the travelling direction i.e. the general longitudinal axis of the tractor) whereby they are no longer in the path of travel of a subsequent pass of the tractor and trailed combination when handling an adjacent swath line.

In a bale wrapper apparatus, it is usual to provide an electro-hydraulically controlled operating system, whereby an operating cycle will include: receiving a bale from the baler and transferring it to a bale wrapping table; applying stretch film wrapping to the bale while on the table; and rearward discharge of the wrapped bale. Hydraulic motors and rams operate in a programmed sequence, to provide a fully automatic cycle of operation.

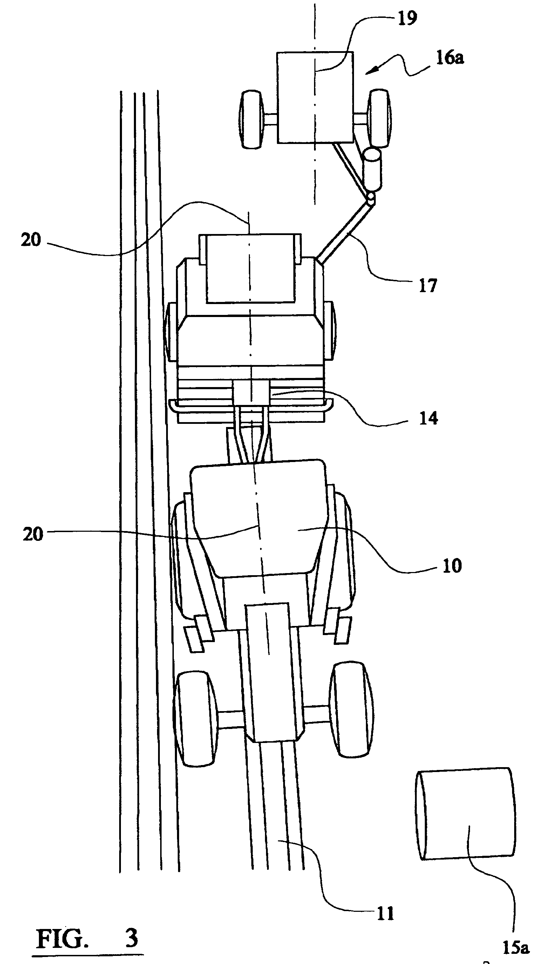

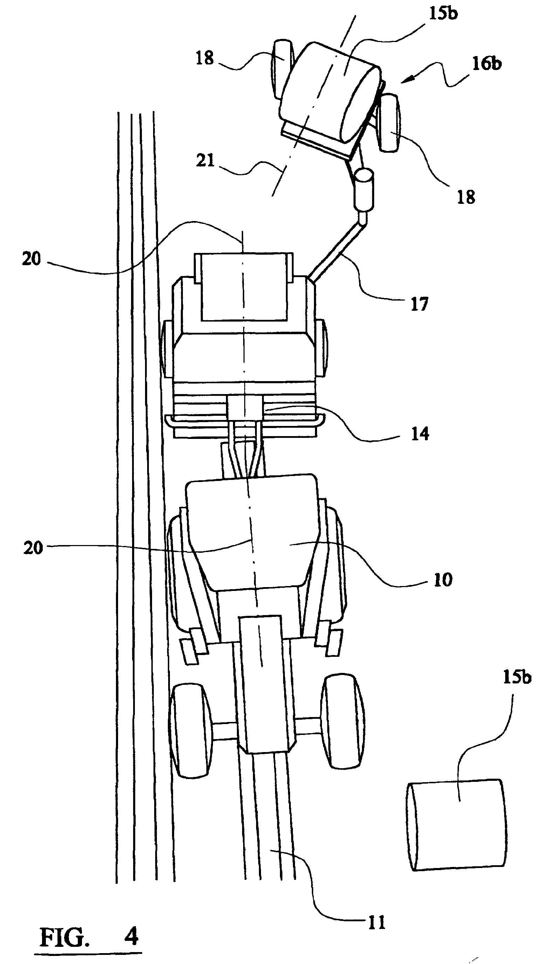

The two preferred embodiments of the invention, shown in Figures 3 and 4, provide an operating cycle, in which the rearward discharge of the wrapped bale includes a lateral component, relative to the axis of the tractor and trailed combination, whereby the wrapped bale is deposited to one side of the axis, rather than directly in line with the axis as per the arrangement shown in Figures 1 and 2.

In the embodiment shown in Figure 3, the hydraulic operating cycle works in such a way that the longitudinal axis 19 of the bale wrapper apparatus (designated 16a) is displaced from its receiving position i.e. laterally relative to the general axis 20 of the tractor and trailed combination, at any convenient time in the operating cycle, after reception of the bale by the bale wrapping table, and prior to discharge of the wrapped bale. This is achieved by hydraulic actuation of a drawbar 17, which couples the bale wrapper apparatus 16a to the rear of baler 14, so that a wrapped bale 15a is discharged laterally relative to the general axis (20) of the tractor and the combination i.e. laterally relative to the general line of the swath 11. By this means, a line of wrapped bales is deposited on the ground, (one of which is shown by reference 15a), which is spaced apart laterally relative to the swath 11 which is being worked and by the tractor and trailed combination. Evidently, the wrapped bale 15a deposited during working on one swath line 11 is spaced by a sufficient distance laterally that it does not impede the forward movement of the tractor and the trailed combination during working of a subsequent adjacent swath line.

It should be understood that, after discharge of the wrapped bale, the final stage of the operating cycle of the bale wrapper apparatus will be to return it to its position directly behind the baler 14, by return movement of a hydraulic actuator controlling the angle of the draw bar 17, ready to receive a further bale from the baler, and to start a new cycle of operation.

The second embodiment shown in Figure 4 comprises another way of achieving necessary lateral spacing of wrapped bales from the line of a new swath, without impeding the forward travel of the tractor and the combination during a subsequent pass along the field. In this embodiment, the bale wrapper apparatus, designated by reference 16b, has an adjustable set of wheels 18, which are hydraulically actuated to take-up a steering angle, during the operating cycle, i.e. between receiving the bale from the baler, and the subsequent discharge of the wrapped bale, so that the axis 21 of the bale wrapper apparatus 16b is laterally spaced, and inclined to the general axis 20 of the combination (and also of the swath 11) and also discharges the wrapped bale 15b in a direction which is both rearward and also laterally of the swath which is being picked-up. By this means, a row of deposited wrapped bales 15b is formed from each swath 11, in which the row is laterally spaced from the next swath to be picked-up by a sufficient extent that the wrapped bales do not impede the next forward travel of the tractor and trailed combination. Furthermore, the wrapped bales 15b in the row are also arranged with their axes inclined to the general direction of the row.

The operating cycle of the electro-hydraulically controlled operating system of the bale wrapper apparatus 16b is such that the wrapper apparatus 16b is located directly behind the bale 14, to receive a bale therefrom, but after the bale has been transferred to the bale wrapping table and, at any convenient point or time in the operating cycle prior to rearward discharge of the wrapped bale, the steering mechanism of the wheels 18 is adjusted so as to effect lateral movement of the wrapper apparatus 16b, relative to the general axis of the combination (and also of the line of the swath 11), as shown in Figure 4. Also, the general axis of the wrapper apparatus 16b is inclined to the general axis of the tractor / baler combination. After discharge of the wrapped bale, the final stage of the operating cycle is to return the steering mechanism to a datum position, whereby the wrapper apparatus 16b is again directly behind the baler 14 and the tractor 10.

Therefore, in both embodiments of the invention, as shown in Figures 3 and 4, the driver of the tractor 10 is only required to steer the tractor 10 so as to follow the line of the swath 11, and the operating cycle of the bale wrapper apparatus (16a or 16b) is automatically controlled so as to receive a bale from the baler 14 (when the apparatus is located directly behind the baler 14), but is able to discharge the wrapped bale 15a or 15b by a sufficient lateral spacing from the general axis of the combination, that a row of wrapped bales is deposited on the ground which will not impede the passage of the trailed combination during a subsequent pass along an adjacent swath to be picked-up. Also, at the completion of each operating cycle of the apparatus 16a of 16b, it returns to its datum position, ready for receiving a further bale.

In a development of the embodiment shown in Figures 3 and 4, the axis of the bale wrapper can be displaced laterally i.e. slightly downhill (before start of a new operating cycle) so as to receive a bale from the baler when the combination is travelling along a slope (when the bale discharged from the baler may roll a little way transversely of the travelling direction). The operating program may include this possibility, and which may be selected manually by the driver, or by an automatic sensor arrangement e.g. a level sensor.

The program may return the wrapper to the in-line position (or even laterally displaced to the other side) prior to discharge of the wrapped bale at the completion of the operating cycle.

An electro-hydraulic control circuit is therefore provided to control the operating cycle of the apparatus, and is programmed to provide a datum position of the apparatus, for receiving a bale from the baler 14, in which the axis 19, 21 of the apparatus substantially coincides with the axis 20 of the baler. However, if required, the control circuit may be programmed to include a selectable option in which the axis 19, 21 of the apparatus is parallel to, but laterally spaced from the axis 20 of the baler, in order to receive a bale from the baler when the combination is travelling along sloping ground.

The option may be set so as to be manually implemented by the driver of the tractor, when required. Alternatively, the option may be implemented automatically by a slope detection monitor.

## Claims

1. A bale wrapper apparatus (16a, 16b) which is intended to be coupled to the rear of a baler (14) and to form with the baler (14) a towable baler / wrapper combination, in which the bale wrapper comprises:
a wheel-supported frame;
coupling means (17) mounted on the frame and arranged to couple the apparatus to the rear of a baler (14) so that a bale (15) can be received from the baler (14), with the axis (19, 21) of the wrapper apparatus (16a, 16b) in a receiving position located generally in line with, or close to, the axis (20) of the baler (14) to which it is to be coupled;
a front mounted bale-engagement device operative to transfer, or assist in the transfer of a bale from the baler (14) to the wrapper apparatus (16a, 16b);
means for applying stretch-film wrapping to the bale;
means for discharging a wrapped bale from the apparatus; and,
means providing a cycle of operation of the bale wrapper apparatus, to effect (a) transfer of a bale to the apparatus, (b) wrapping of the bale, and (c) subsequent discharge of the wrapped bale:
**characterised in that** the operating cycle includes means for adjusting the axis (19,21) of the bale wrapper apparatus (16a, 16b) from its receiving position, prior to effecting discharge of the wrapped bale (15a, 15b), laterally of the axis (20) of the baler (14), such means also being operative to return the axis (19, 21) of the bale wrapper apparatus (16a, 16b) to the receiving position after discharge of the wrapped bale, and prior to initiating of a new cycle of operation.

2. Apparatus according to claim 1, in which the coupling means comprises a draw bar (17) which is angularly adjustable about its coupling point to the rear of the baler (14) during an operating cycle of the apparatus, to provide adjustment of the axis (19) of the bale wrapper apparatus (16a) relative to the axis (20) of the baler (14), prior to rearward and lateral discharge of a wrapped bale (15a).

3. Apparatus according to claim 1, in which a wheel-set (18) supports the frame, such wheel-set being adjustable like a set of steering wheels, under the control of the means providing the operating cycle for the bale wrapper apparatus (16b) in order to adjust the axis (21) of the apparatus (16b) to an oblique setting relative to the axis (20) of the baler (14), prior to discharge of the wrapped bale (15b).

4. Apparatus according to any one of claims 1 to 3, in which an electro-hydraulic control circuit is provided to control the operating cycle of the apparatus.

5. Apparatus according to claim 4, in which the control circuit is programmed to provide a datum position of the apparatus, for receiving a bale from the baler (14), in which the axis (19, 21) of the apparatus substantially coincides with the axis (20) of the baler.

6. Apparatus according to claim 5, in which the control circuit is programmed to include a selectable option wherein the axis (19,21) of the apparatus is parallel to, but laterally spaced from the axis (20) of the baler (14), in order to receive a bale from the baler when the combination is travelling along sloping ground.

7. Apparatus according to claim 6, in which the option can be set so as to be manually implemented by the driver of the propelling vehicle (10).

8. Apparatus according to claim 6, in which the option can be implemented automatically by a slope detection monitor.

## Patentansprüche

1. Ballenwickelvorrichtung (16a, 16b), welche dafür vorgesehen ist, mit der Rückseite einer Ballenpresse (14) gekoppelt zu sein und mit der Ballenpresse (14) eine abschleppbare Ballenpress-/Wickelkombination auszubilden, bei welcher die Ballenwickelvorrichtung umfasst:
einen Rad gestützten Rahmen;
Kopplungsmittel (17), welche auf dem Rahmen angebracht und derart angeordnet sind, dass sie die Vorrichtung derart mit der Rückseite einer Ballenpresse (14) koppeln, dass ein Ballen (15) von der Ballenpresse (14) aufgenommen werden kann, wobei die Achse (19,21) der Ballenwickelvorrichtung (16a, 16b) im Allgemeinen ausgerichtet mit oder in der Nähe der Achse (20) der Ballenpresse (14), mit welcher sie zu koppeln ist, in einer aufnehmenden Stellung angeordnet ist;
eine vorn angebrachte Balleneingriffsvorrichtung, welche betriebsfähig ist, einen Ballen von der Ballenpresse (14) zu der Ballenwickelvorrichtung (16a, 16b) umzusetzen oder bei der Umsetzung zu helfen;
Mittel zum Aufbringen einer Stretchfolie, welche auf den Ballen gewickelt wird;
Mittel zum Entladen eines gewickelten Ballens von der Vorrichtung; und
Mittel zum Bereitstellen eines Operationszyklus der Ballenwickelvorrichtung, um (a) eine Umsetzung eines Ballens zu der Vorrichtung, (b) ein Wickeln des Ballens und (c) eine nachfolgende Entladung des gewickelten Ballens zu bewirken:
**dadurch gekennzeichnet,**
**dass** der Operationszyklus Mittel aufweist, um die Achse (19, 21) der Ballenwickelvorrichtung (16a, 16b) vor einer Ausführung einer Entladung des gewickelten Ballens (15a, 15b) von ihrer aufnehmenden Stellung neben die Achse (20) der Ballenpresse (14) einzustellen, wobei diese Mittel auch betriebsfähig sind, um die Achse (19, 21) der Ballenwickelvorrichtung (16a, 16b) nach der Entladung des gewickelten Ballens und vor einer Einleitung eines neuen Operationszyklus zu der aufnehmenden Stellung zurückzustellen.

2. Vorrichtung nach Anspruch 1, bei welcher die Koppelmittel eine Zugstange (17) umfassen, welche während eines Betriebszyklus der Vorrichtung gegenüber ihrem Kopplungspunkt winklig mit der Rückseite der Ballenpresse (14) einstellbar ist, um vor einer rückwärtigen und seitlichen Entladung eines gewickelten Ballens (15a) für eine Einstellung der Achse (19) der Ballenwickelvorrichtung (16a) relativ zu der Achse (20) der Ballenpresse (14) zu sorgen.

3. Vorrichtung nach Anspruch 1, bei welchem ein Rädersatz (18) den Rahmen lagert, wobei dieser Rädersatz unter der Steuerung der Mittel, welche den Betriebszyklus für die Ballenwickelvorrichtung (16b) bereitstellen, wie ein Satz von lenkenden Rädern einstellbar ist, um vor einer Entladung des gewickelten Ballens (15b) die Achse (21) der Vorrichtung (16b) zu einer schrägen Einstellung relativ zu der Achse (20) der Ballenpresse (14) einzustellen.

4. Vorrichtung nach einem der Ansprüche 1 bis 3, bei welcher eine elektrohydraulische Steuerschaltung vorhanden ist, um den Betriebszyklus der Vorrichtung zu steuern.

5. Vorrichtung nach Anspruch 4, bei welcher die Steuerschaltung derart programmiert ist, dass für eine Bezugsposition der Vorrichtung zur Aufnahme eines Ballens von der Ballenpresse (14) gesorgt wird, bei welcher die Achse (19, 21) der Vorrichtung im Wesentlichen mit der Achse (20) der Ballenpresse übereinstimmt.

6. Vorrichtung nach Anspruch 5, bei welcher die Steuerschaltung derart programmiert ist, dass sie eine auswählbare Option aufweist, wobei die Achse (19, 21) der Vorrichtung parallel zu aber seitlich beabstandet von der Achse (20) der Ballenpresse (14) ist, um einen Ballen von der Ballenpresse aufzunehmen, wenn sich die Kombination entlang eines abfallenden Bodens bewegt.

7. Vorrichtung nach Anspruch 6, bei welcher die Option derart eingestellt werden kann, dass sie manuell durch den Fahrer des angetriebenen Fahrzeugs (10) ausgeführt werden kann.

8. Vorrichtung nach Anspruch 6, bei welcher die Option automatisch durch eine Neigungserfassungsüberwachungseinrichtung ausgeführt werden kann.

## Revendications

1. Appareil destiné à envelopper les balles (16a, 16b) qui est prévu être raccordé à la partie arrière d'une ramasseuse-presse (14) et pour former avec la ramasseuse-presse (14) une combinaison pouvant être remorquée de ramasseuse-presse et d'enrubanneuse dans lequel l'enrubanneuse de balles comprend :
un châssis supporté par des roues,
un moyen de couplage (17) monté sur le châssis et agencé pour accoupler l'appareil à l'arrière d'une ramasseuse-presse (14) de telle sorte qu'une balle (15) puissent être reçue de la ramasseuse-presse (14), l'axe (19, 21) de l'appareil destiné à envelopper (1 6a, 16b) se trouvant dans une position de réception située pratiquement en ligne avec l'axe (20) de la ramasseuse-presse (14) à laquelle il est accouplé, ou proche de celle-ci,
un dispositif, monté à l'avant, de prise de balle fonctionnant pour transférer, ou pour assister le transfert d'une balle provenant de la ramasseuse-presse (14) vers l'appareil destiné à envelopper (16a, 16b),
un moyen destiné à appliquer un film étirable enveloppant la balle,
un moyen destiné à décharger une balle enveloppée de l'appareil, et
un moyen fournissant un cycle de fonctionnement de l'appareil destiné à envelopper les balles afin d'effectuer (a) le transfert d'une balle vers l'appareil, (b) l'enveloppement de la balle et ensuite (c) la décharge de la balle enveloppée :
**caractérisé en ce que** le cycle de fonctionnement comprend un moyen destiné à régler l'axe (19, 21) de l'appareil destiné à envelopper les balles (16a, 16b) depuis sa position de réception, avant de réaliser la décharge de la balle enveloppée (15a, 15b) latéralement par rapport à l'axe (20) de la ramasseuse-presse (14), un tel moyen fonctionnant également pour retourner l'axe (19, 21) du dispositif destiné à envelopper les balles (16a, 16b) vers la position de réception après la décharge de la balle enveloppée et avant d'engager un nouveau cycle de fonctionnement.

2. Appareil selon la revendication 1, dans lequel le moyen de couplage comprend une barre de traction (17) qui peut être réglée de manière angulaire autour de son point de couplage à l'arrière de la ramasseuse-presse (14) pendant le cycle de fonctionnement de l'appareil afin de fournir un réglage de l'axe (19) de l'appareil destiné à envelopper les balles (16a) par rapport à l'axe (20) de la ramasseuse-presse (14) avant le déchargement par l'arrière et latéral d'une balle enveloppée (15a).

3. Appareil selon la revendication 1, dans lequel un ensemble de roues (18) supporte le châssis, cet ensemble de roues pouvant être réglé comme un ensemble de roues directionnelles sous la commande du moyen fournissant le cycle de fonctionnement de l'appareil destiné à envelopper les balles (16b) de façon à régler l'axe (21) de l'appareil (16b) selon un réglage oblique par rapport à l'axe (20) de la ramasseuse-presse (14), avant de décharger la balle enveloppée (15b).

4. Appareil selon l'une quelconque des revendications 1 à 3, dans lequel un circuit de commande électro hydraulique est prévu pour commander le cycle de fonctionnement de l'appareil.

5. Appareil selon la revendication 4, dans lequel le circuit de commande est programmé pour fournir une position de référence de l'appareil afin de recevoir une balle provenant de la ramasseuse-presse (14) dans lequel l'axe (19, 21) de l'appareil coïncide pratiquement avec l'axe (20) de la ramasseuse-presse.

6. Appareil selon la revendication 5, dans lequel le circuit de commande est programmé pour inclure une option pouvant être sélectionnée dans laquelle l'axe (19, 21) de l'appareil est parallèle à la ramasseuse-presse (14), mais est espacé latéralement de l'axe (20) de celle-ci, de façon à recevoir une balle provenant de la ramasseuse-presse lorsque la combinaison se déplace le long d'un sol en pente.

7. Appareil selon la revendication 6, dans lequel l'option peut être réglée de façon à être mise en oeuvre manuellement par le conducteur du véhicule de propulsion (10).

8. Appareil selon la revendication 6, dans lequel l'option peut être mise en oeuvre automatiquement par un dispositif de surveillance de détection de pente.
